(19) Europäisches Patentamt
European Patent Office
Office européen des brevets

(11) **EP 2 009 930 A2**

(12) **EUROPEAN PATENT APPLICATION**

(43) Date of publication:
**31.12.2008 Bulletin 2009/01**

(51) Int Cl.:
***H04N 9/67*** *(2006.01)*

(21) Application number: **08250376.4**

(22) Date of filing: **31.01.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.06.2007 JP 2007169254**

(71) Applicant: **Hitachi, Ltd.**
**Chiyoda-ku**
**Tokyo 100-8280 (JP)**

(72) Inventors:
• **Kimura, Yuichiro**
**Tokyo 100-8220 (JP)**

• **Chiaki, Yutaka**
**Tokyo 100-8220 (JP)**
• **Kimura, Katsunobu**
**Tokyo 100-8220 (JP)**
• **Ohki, Hideaki**
**Tokyo 100-8220 (JP)**
• **Tajima, Masaya**
**Tokyo 100-8220 (JP)**
• **Takata, Kiyoshi**
**Tokyo 100-8220 (JP)**

(74) Representative: **Hackney, Nigel John et al**
**Mewburn Ellis LLP**
**York House**
**23 Kingsway**
**London WC2B 6HP (GB)**

(54) **Image display apparatus**

(57) An image display apparatus, which converts a video signal in a first video signal format into a video signal in a second video signal format causing an increase in dynamic range, and displays the video signal in the second video format, includes a video signal conversion circuit configured to receive the video signal in the first video signal format and to produce the video signal in the second video signal format, a drive circuit configured to drive an image display panel according to the video signal in the second video signal format, and a signal processing module including signal processing circuits configured to perform signal processing necessary to drive the drive circuit, characterized in that the video signal conversion circuit is situated inside the signal processing module.

FIG.1

**Description**

The disclosures herein generally relate to image display apparatuses, and particularly relate to an image display apparatus which performs a video-signal conversion causing an increase in a dynamic range when a video signal in a first video signal format is converted into a video signal in a second video signal format for display.

Color reproduction in a television system is conventionally defined based on the characteristics of CRT fluorescent material. The standards for television signals and image display apparatuses are limited to within the color gamut of the sRGB color space. In recent years, there has been a trend to broaden the color gamut of cameras and display apparatuses. Against this background, the xvYCC standard, which is a new standard for an extended-color-gamut color space, has been established for the purpose of representing vivid colors while maintaining compatibility with conventional television signals (see "New Standard for Extended Gamut Color Space for Video Applications," The Journal of the Institute of Image Information and Television Engineers, vol. 60, No. 11, pp. 1749-1754, 2006, for example).

In this xvYCC standard, the relationship between the luminance signal and the color space as defined in the ITU-R BT.709/601 standard is maintained in order to ensure that the color space of the xvYCC standard is upper compatible with an existing color space defined in the ITU-R BT.709/601 standard.

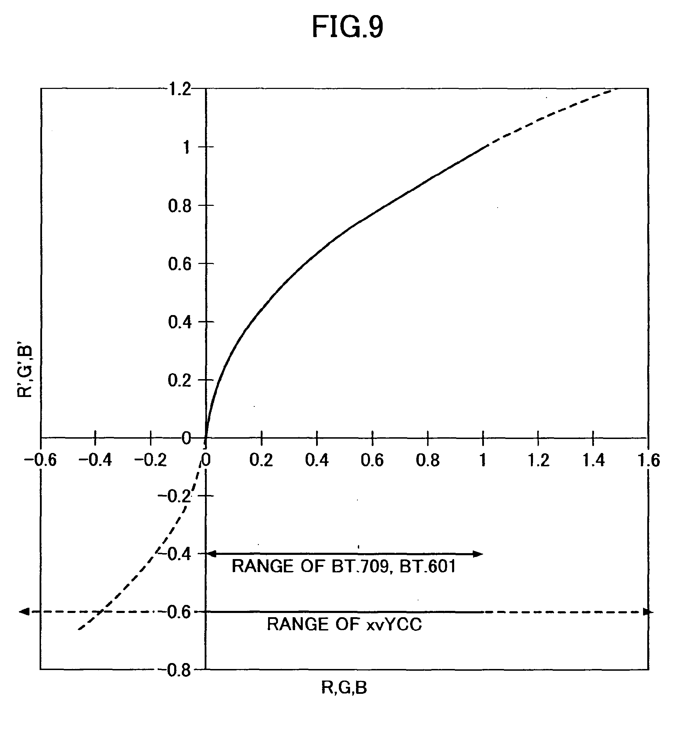

Fig. 9 is a drawing showing the photoelectric conversion characteristics of the ITU-R BT.709 standard and the xvYCC$_{709}$ standard. As shown in Fig. 9, RGB color signals are not defined in areas lower than 0 or higher than 1 in the ITU-R BT.709 standard, so that the luminance and chromaticity signals obtained through conversion from color signals in these areas are also not defined. No utilization is thus made even if signal values can exist in these areas. In the xvYCC$_{709}$ standard, the photoelectric conversion characteristics of the ITU-R BT.709 standard are extended. The existing characteristics are extended into the area where the color signal is greater than 1, and the characteristics in the area below 0 (minus area) are defined as being a symmetric with the plus area with respect to the point of origin, thereby introducing a negative signal to broaden the color gamut. As an RGB signal format, a signal range of 0 to 1 in the ITU-R BT.709 standard is extended by three times to a signal range of approximately -1 to 2 in the xvYCC$_{709}$ standard. Namely, the dynamic range of a video signal is extended by three times.

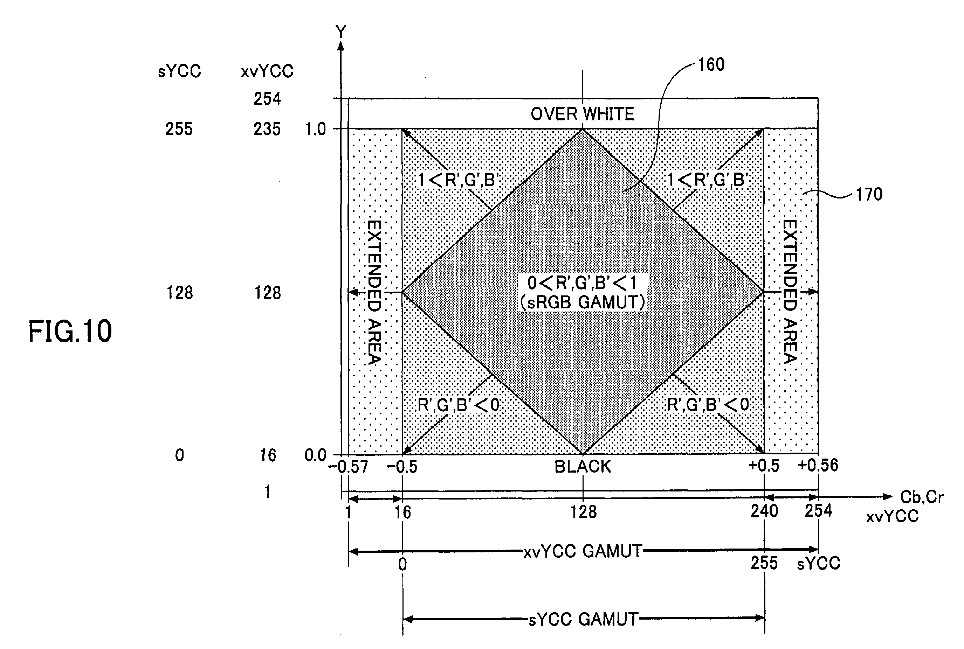

Fig. 10 is a drawing showing an area where a video signal can assume a value in a YCbCr signal format, with the vertical axis representing a luminance signal Y and the horizontal axis representing chromaticity signals Cb and Cr. In Fig. 10, a rhombus area 106 shown at the center represents an area where a video signal can exist in the color gamut of the conventional sRGB color space. In the xvYCC color space, on the other hand, this area is extended to surrounding areas around the rhombus area 160, so that areas corresponding to a Cb Cr signal range of 0.5 to 0.56 and a Cb Cr signal range of -0.57 to 0.5 are also used as video signal areas.

In this manner, the xvYCC standard achieves the inclusion of information in an extended color gamut in areas that were not conventionally defined. This makes it possible to use the same video signals as conventional signals with respect to a video signal in the sRGB color gamut corresponding to the conventional rhombus area 160 and also to represent video signal colors in extended areas 170 by using a camera and display apparatus capable of reproducing video signals in these extended areas 170.

Upon receiving a television video signal in a YCbCr format, a conventional television receiver first performs necessary television signal processing such as a display format adjustment, and, then, performs a YCbCr/RGB conversion for converting the YCbCr format into the RGB format. The video signal in the RGB format is then supplied to a display module having RGB-format inputs. In the case of a plasma display apparatus or liquid crystal display apparatus, an LVDS (low voltage differential signaling) interface is used to transfer video signals in the RGB format to a display module having RGB-format inputs.

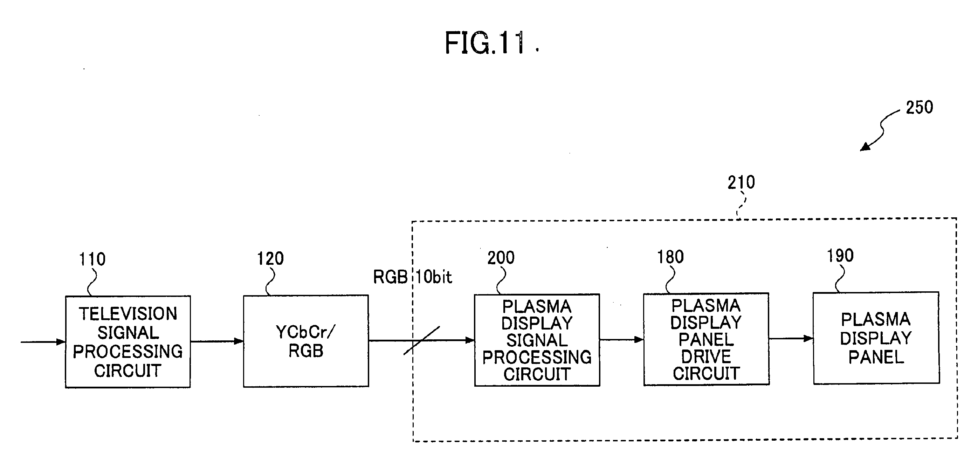

Fig. 11 is a block diagram showing an example of the configuration of a conventional plasma display apparatus. In Fig. 11, a conventional plasma display apparatus 250 includes a television signal processing circuit 110 configured to receive television video signals in the YCbCr format, a YCbCr/RGB video signal conversion circuit 120 for converting video signals in the YCbCr format into video signals in the RGB format, and a plasma display module 210. The plasma display module 210 includes a plasma display panel 190 serving as an image display panel, a plasma display panel drive circuit 180 for driving the plasma display panel 190, and a plasma display signal processing circuit 200 for performing signal processing necessary to drive the plasma display panel 190. The plasma display panel drive circuit 180 includes an address electrode drive circuit (not shown), a sustain electrode drive circuit (not shown), etc., and serves to drive the electrodes disposed in the plasma display panel 190. Upon receiving video signals in the RGB format, the plasma display signal processing circuit 200 performs signal processing for conversion into a drive format unique to the subfield-type plasma display panel 190. Through this conversion, the plasma display panel drive circuit 180 can drive the plasma display panel 190.

The video signal conversion performed by the YCbCr/RGB video signal conversion circuit 120 is such that a Y signal ranging from 0 to 1 and Cb Cr signals ranging from -0.5 to 0.5 are converted into RGB signals ranging from 0 to 1 if the relevant television signals conform to the ITU-R BT.709/601 standard. When 10-bit-width YCbCr signals, for example, are supplied to the YCbCr/RGB video signal conversion circuit 120, the YCbCr/RGB video signal conversion circuit 120 produces 10-bit-width RGB signals, which are then transmitted through a coupled LVDS interface or the like for provision to the plasma display signal processing circuit 200.

When YCbCr-format video signals according to the xvYCC standard as previously described are converted into RGB-format video signals, the signal range of the RGB signals is extended by three times, as was described in connection with Fig. 9. In order to maintain compatibility with a conventional configuration, thus, the bit width of RGB signals for use in signal transmission needs to be increased by two bits. For example, 12 bits are necessary when using the xvYCC standard where conventional RGB signals are transmitted in 10-bit width.

The conventional plasma display apparatus 250 shown in Fig. 11 is configured such that the circuit board on which the YCbCr/RGB video signal conversion circuit 120 is implemented is separate from the circuit board on which the plasma display signal processing circuit 200 is implemented. When video signals in the RGB format are transmitted between these two circuit boards, an increase in bit width as described above gives rise to a problem of cost increase with respect to connectors or coupling components for coupling these circuit boards and with respect to an LVDS transmitter/receiver.

Accordingly, there is a need for an image display apparatus that performs video signal conversion causing an increase in dynamic range, and that can transmit video signals to a signal processing circuit necessary for image display without increasing cost associated with the signal transmission.

In a first aspect the present invention provides an image display apparatus, which performs a video signal conversion converting a video signal in a first video signal format into a video signal in a second video signal format causing an increase in dynamic range for display of the video signal in the second video format, includes a video signal conversion circuit configured to receive the video signal in the first video signal format and to produce the video signal in the second video signal format, a drive circuit configured to drive an image display panel according to the video signal in the second video signal format, and a signal processing module including signal processing circuits configured to perform signal processing necessary to drive the drive circuit, wherein the video signal conversion circuit is situated inside the signal processing module.

With this arrangement, the image display apparatus, which converts a video signal in such a manner as to increase its dynamic range, can drive an image display panel without an increase in transmission cost because there is no need to transmit the converted video signal having an increased dynamic range from module to module.

A second aspect of the invention is configured based on the image display apparatus of the first implementation, such that the signal processing module is one of a circuit board and an ASIC.

With this arrangement, the signal processing performed by the signal processing module is performed within a single circuit board or within a single ASIC, which eliminates the need for transmission of the signal having an increased dynamic range. This serves to avoid an increase in transmission cost.

A third aspect of the invention is configured based on the image display apparatus of the first implementation, such that the video signal in the first video signal format is a YCbCr signal, and the video signal in the second video signal format is an RGB signal.

With this arrangement, the image display panel having RGB inputs can be driven without incurring an increase in transmission cost with respect to a plasma display apparatus or liquid crystal display apparatus for which color coordinate conversion from YCbCr signals to RGB signals is necessary .

A fourth aspect of the invention is configured based on the image display apparatus of the third implementation, such that the image display panel is a plasma display panel, and the signal processing circuits include a subfield conversion circuit.

With this arrangement, the signal transmission between the video signal conversion circuit and the subfield conversion circuit specific to the purpose of driving a plasma display panel can be performed within the same signal processing module. This can avoid transmitting the signal having an increased dynamic range between the video signal conversion circuit and the subfield conversion circuit.

A fifth aspect of the invention is configured based on the image display apparatus of the fourth implementation, such that the signal processing circuits include a reverse gamma correction circuit.

With this arrangement, the reverse gamma correction, which is preferably provided for the purpose of driving a plasma display panel, can be performed within the same signal processing circuit implemented in the same signal processing module, without the need to transfer the signal having an increased dynamic range.

A sixth aspect of the invention is configured based on the image display apparatus of the fifth implementation, such that the signal processing circuits include a color matrix circuit.

With this arrangement, the adjustment of image colors can be performed within the same signal processing circuit implemented in the same signal processing module, without the need to transfer the signal having an increased dynamic range.

A seventh aspect of the invention is configured based on the image display apparatus of the sixth implementation, such that the signal processing circuits include a white balance correction circuit.

With this arrangement, the correction of image white balance can be performed within the same signal processing circuit implemented in the same signal processing module, without the need to transfer the signal having an increased dynamic range.

In an eighth aspect of the invention, an image display apparatus, which performs a video signal conversion converting a video signal in a first video signal format into a video signal in a second video signal format causing an increase in dynamic range for display of the video signal in the second video format, includes a video signal conversion circuit configured to receive the video signal in the first video signal format and to produce the video signal in the second video signal format, a drive circuit configured to drive an image display panel according to the video signal in the second video signal format, and a signal processing module including signal processing circuits configured to perform signal processing necessary to drive the drive circuit, wherein the video signal conversion circuit is situated inside the signal processing module, and a video signal input into the signal processing module is in the first video signal format.

According to at least one aspect of the invention, an increase in the number of bits for transmission between modules in an image display apparatus can be avoided even when the image display apparatus involves the conversion of a video signal causing an increase in dynamic range. An increase in transmission cost can thus be avoided.

## BRIEF DESCRIPTION OF THE DRAWINGS

Other objects and further features of the present invention will be apparent from the following detailed description when read in conjunction with the accompanying drawings, in which:

Fig. 1 is a block diagram showing an image display apparatus according to an embodiment of the present invention;

Fig. 2 is a block diagram showing the configuration of a plasma display apparatus according to the present embodiment;

Figs. 3A through 3C are drawings for explaining the function of a reverse gamma correction circuit, in which Fig. 3A shows the characteristics of a video signal that has been corrected for transmission gamma and is supplied to the reverse gamma correction circuit, Fig. 3B shows the characteristics of correction performed by the reverse gamma correction circuit, and Fig. 3C shows the characteristics of an output video signal of the reverse gamma correction circuit;

Fig. 4 is a drawing for explaining the function of a color matrix circuit;

Fig. 5 is a block diagram showing an example of the configuration of the color matrix circuit;

Fig. 6 is a block diagram showing an example of a white balance correction circuit;

Fig. 7 is a drawing schematically showing a portion of the plasma display apparatus;

Fig. 8 is a drawing for explaining an example of a drive sequence performed by the plasma display apparatus;

Fig. 9 is a drawing showing the photoelectric conversion characteristics of the ITU-R BT.709 standard and the $xvYCC_{709}$ standard;

Fig. 10 is a schematic drawing showing the color gamut of a video signal; and

Fig. 11 is a block diagram of a related-art plasma display apparatus.

## DESCRIPTION OF THE PREFERRED EMBODIMENTS

In the following, the best mode for carrying out the present invention will be described in detail by referring to the accompanying drawings.

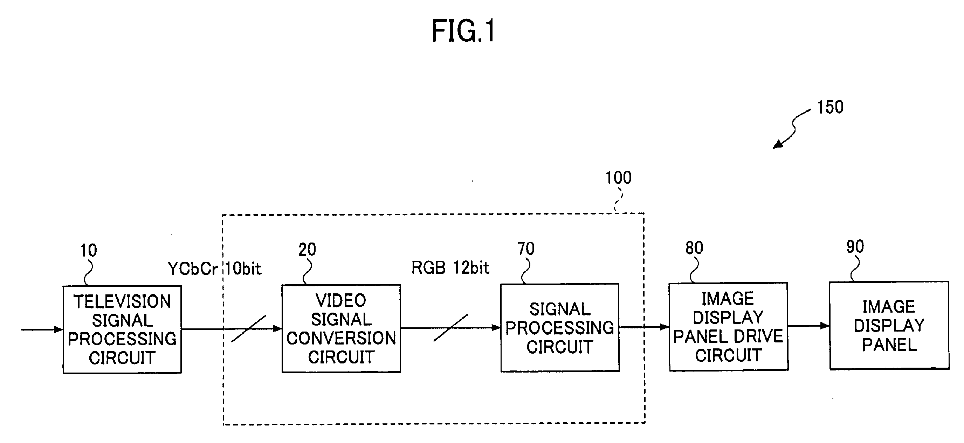

Fig. 1 is a block diagram showing an image display apparatus according to an embodiment of the present invention. In Fig. 1, an image display apparatus 150 according to the present embodiment includes a television signal processing circuit 10, a video signal conversion circuit 20, a signal processing circuit 70, an image display panel drive unit 80, and an image display panel 90. The video signal conversion circuit 20 and the signal processing circuit 70 are disposed in a common signal processing module 100. The television signal processing circuit 10, the image display panel drive circuit 80, and the image display panel 90 do not need to be provided in the common signal processing module 100, and may be coupled through LVDS or signal lines.

The television signal processing circuit 10 serves to process television video signals supplied thereto. Such signal processing includes the adjustment of color density and/or hue and the reduction and enlargement of image size in conformity to the size of the image display panel 90. This signal processing can be performed by use of the YCbCr format when the video signals are supplied in the YCbCr format, for example. In this configuration, this signal processing is performed by use of the YCbCr format.

The video signal conversion circuit 20 receives video signals in a first video signal format from the television signal processing circuit 10, and converts them into video signals in a second video signal format different from the first video signal format. That is, the video signal conversion circuit 20 serves to perform a video-signal-format conversion. The video signal conversion circuit 20 may be a YCbCr/RGB conversion circuit if the video signals supplied to the video signal conversion circuit 20 are YCbCr signals and the video signals output from the video signal conversion circuit 20 are RGB signals, for example. The following description of the present embodiment will be provided with reference to an example in which the YCbCr/RGB conversion is used. However, this example is not intended to be limiting in any manner, and the present embodiment is applicable to any other video signal conversions causing an increase in dynamic range.

When video signals in the YCbCr format are supplied in 10-bit width, for example, the RGB signals obtained upon performing signal conversion by use of a conventional color gamut will have a 10-bit width. When video signals with an extended gamut according to the xvYCC standard are supplied, on the other hand, RGB signals in areas where values are negative or larger than 1 are produced upon conversion into RGB signals, resulting in a three-time increase in dynamic range. If these RGB signals are to be transmitted while maintaining image quality to the same level as in the conventional case, the bit width of signals needs to be increased by 2 bits to 12 bits.

Formula (1) in the following represents an example of conversion performed by the video signal conversion circuit 20 according to the ITU-R BT.709 standard.

$$\begin{pmatrix} R \\ G \\ B \end{pmatrix} = \begin{pmatrix} 1.0000 & 0.0000 & 1.5748 \\ 1.0000 & -0.1873 & -0.4681 \\ 1.0000 & 1.8556 & 0.0000 \end{pmatrix} \begin{pmatrix} Y \\ Cb \\ Cr \end{pmatrix} \cdots\cdots\cdot(1)$$

Formula (2) in the following represents an example of conversion performed by the video signal conversion circuit 20 according to the ITU-R BT.601 standard.

$$\begin{pmatrix} R \\ G \\ B \end{pmatrix} = \begin{pmatrix} 1.0000 & 0.0000 & 1.4020 \\ 1.0000 & -0.3441 & -0.7141 \\ 1.0000 & 1.7720 & 0.0000 \end{pmatrix} \begin{pmatrix} Y \\ Cb \\ Cr \end{pmatrix} \cdots\cdots\cdot(2)$$

When RGB signals resulting from the YCbCr/RGB conversion performed by the video signal conversion circuit 20 are to be transmitted, there is a need to modify the LVDS and/or coupling devices used for signal transmission in order to cope with an increase in dynamic range. In the image display apparatus 150 according to the present embodiment, the signal processing circuit 70 for immediately following processing is provided in the common signal processing module 100. There is thus no need for signal transmission. Necessary signal processing will be performed within the common signal processing module 100.

The signal processing module 100 is a module on which various circuits are collectively implemented. An example of such module includes a circuit board or ASIC (Application Specific Integrated Circuit) provided in the image display apparatus. With such configuration, the RGB signals output from the video signal conversion circuit 20 do not need to be transmitted through LDVS or the like to the signal processing circuit 70, and a series of signal processing stages can be performed within a single circuit.

It should be noted that the YCbCr/RGB conversion performed by the video signal conversion circuit 20 in the present embodiment involves an increase in dynamic range in general, rather than being limited to a simple increase in bit numbers. In the case of a conventional YCbCr/RGB conversion without having an increase in dynamic range, a YCbCr (4:2:2) format may be employed for YCbCr signal transmission in which the transmission clock rate is compressed to 1/2. In such a case, data indicative of CbCr (chrominance signals) is transmitted only once in every two pixels, so that the YCbCr signals are transmitted by use of a number of bits that is 2/3 times as many as those used in the case of no compression. When these YCbCr signals are converted into RGB signals after the transmission, the number of bits returns to the original number as used before the compression because the Y (luminance signal) is used. If the YCbCr signals have a 24-bit width in a no-compression YCbCr (4:4:4) format, for example, the use of a YCbCr (4:2:2) format for transmission means the use of 16 bits. The conversion of the 16-bit YCbCr signals into RGB signals results in the number of bits returning to 24 bits, which means an increase in bit numbers. In the YCbCr/RGB conversion described above, however, the dynamic range does not increase while the number of bits increases. The YCbCr/RGB conversion performed by the video signal conversion circuit 20 in the present embodiment means a video signal conversion that causes an increase in dynamic range, which is different from a mere increase in numbers of bits associated with a video signal conversion performed after compressed transmission. Accordingly, such compression combined with the system of the present invention can further compress the bit width for transmission of video signals.

The signal processing circuit 70 performs signal processing peculiar to the type of the image display panel 90 where such signal processing is necessary for the image display panel drive circuit 80 to drive the image display panel 90. In the case of the image display panel 90 being a plasma display panel, for example, the signal processing circuit 70 may be provided with a subfield conversion circuit and a signal conversion circuit conforming to the specification of input signals supplied to the panel drivers. In the case of the image display panel 90 being a liquid crystal display panel, for example, the signal processing circuit 70 may be provided with a signal conversion circuit conforming to the specification of input signals supplied to the panel drivers necessary to drive the liquid crystal display panel.

The image display panel drive circuit 80 serves to drive the image display panel 90, and may include a drive control circuit conforming to the type of the image display panel 90.

The image display panel 90 is a means to display an image, and may be implemented as a plasma display panel, a liquid crystal display panel, or the like.

As described above, the image display apparatus 150 is configured such that the video signal conversion circuit 20 is provided in a signal processing module in which the signal processing circuit 70 is implemented, and such that YCbCr signals are directly supplied from the television signal processing circuit 10 through direct coupling. Even when video signals in the YCbCr format inclusive of extended-gamut video information are supplied, signal transmission is performed by use of the YCbCr signals having a low transmission rate. After conversion into RGB signals, signal processing is performed within a single circuit (single module), so that no transmission of RGB signals having an increased dynamic range is performed. This configuration can avoid a cost increase associated with signal transmission.

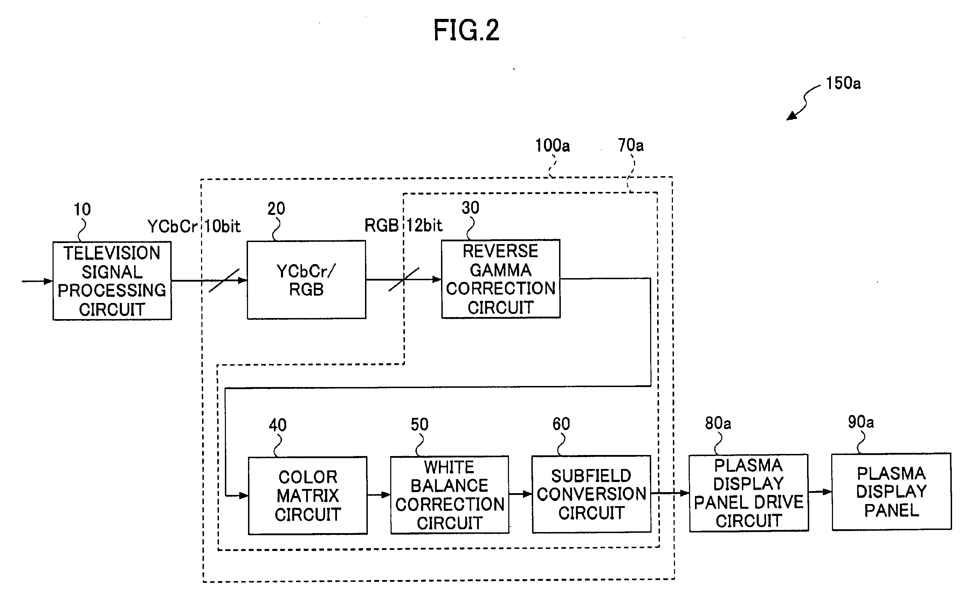

In the following, a more specific embodiment will be described with reference to an example in which a plasma display apparatus is employed as the image display apparatus 150. Fig. 2 is a block diagram showing the configuration of a plasma display apparatus 150a according to the present embodiment. In Fig. 2, the same elements as those of the image display apparatus 150 shown in Fig. 1 are referred to by the same numerals, and a description thereof will be omitted or simplified.

In Fig. 2, the plasma display apparatus 150a according to the present embodiment includes the television signal processing circuit 10, a signal processing module 100a, a plasma display panel drive circuit 80a, and a plasma display panel 90a. The signal processing module 100a includes the video signal conversion circuit 20 and a signal processing circuit 70a. The signal processing circuit 70a includes a reverse gamma correction circuit 30, a color matrix circuit 40, a white balance correction circuit 50, a subfield conversion circuit 60.

The plasma display apparatus 150a shown in Fig. 2 differs from the image display apparatus 150 shown in Fig. 1 in that the reverse gamma correction circuit 30, the color matrix circuit 40, the white balance correction circuit 50, and the subfield conversion circuit 60 are specifically provided. The plasma display panel 90a is employed in place of the image display panel 90, and the plasma display panel drive circuit 80a is used accordingly.

The television signal processing circuit 10 is the same as that described in connection with the embodiment shown in Fig. 1. In the plasma display apparatus 150a, the television signal processing circuit 10 receives YCbCr signals as its inputs, and processes these signals in the YCbCr format to attend to the adjustment of color density and the enlargement and reduction of image size, for example.

The video signal conversion circuit 20 is also the same as that described in connection with the embodiment shown in Fig. 1. The video signal conversion circuit 20 receives from the television signal processing circuit 10 the YCbCr signals that are in a state in which a transmission rate is not expanded. The received YCbCr signals are converted into RGB signals according to formula (1) or formula (2). As a result, RGB signals having 2 extra bits commensurate to an increase in the dynamic range as compared to the YCbCr signals are produced as outputs. If the received YCbCr signals have a 10-bit width, for example, RGB signals having a 12-bit width are produced as outputs. The RGB signals produced as outputs are then supplied to the signal processing circuit 70a provided in the common signal processing module 100a.

The signal processing circuit 70a serves to perform signal processing necessary for driving the plasma display panel drive circuit 80a for driving and controlling the plasma display panel 90a. The signal processing circuit 70a is a circuit that performs signal processing peculiar to the plasma display apparatus 150a. For the signal processing circuit 70a peculiar to the plasma display apparatus 150a, the subfield conversion circuit 60 is essential. The reverse gamma correction circuit 30, the color matrix circuit 40, and the white balance correction circuit 50 may be provided according to need. Each of the circuits 30, 40, 50, and 60 of the signal processing circuit 70a will be described in the following.

The reverse gamma correction circuit 30 serves as a signal characteristic correction circuit that performs reverse correction for reversing a transmission gamma correction with respect to video signals that have been corrected for transmission gamma, thereby affording a linear characteristic to the output signals.

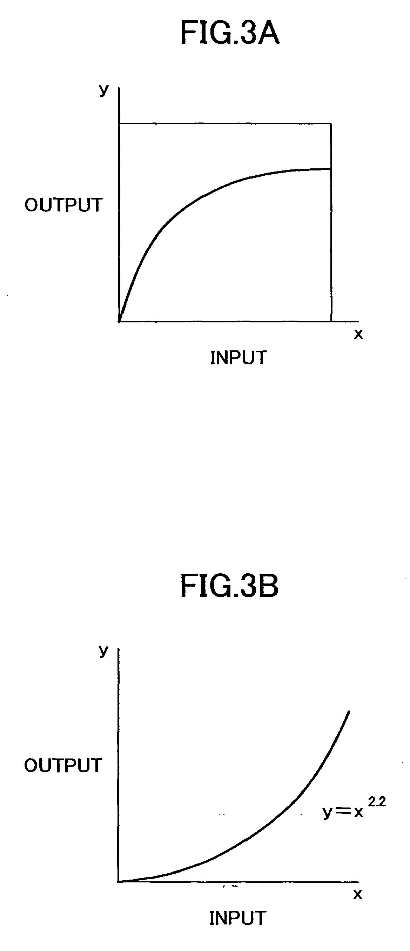

Figs. 3A through 3C are drawings for explaining the function of the reverse gamma correction circuit 30. In Figs. 3A through 3C, an input signal is x, and an output signal is y.

Fig. 3A shows the characteristics of a video signal that has been corrected for transmission gamma and is supplied to the reverse gamma correction circuit. In Fig. 3A, the video signal corrected for the transmission gamma exhibits an upward-sloping characteristic curve that bulges upward around its center.

Fig. 3B shows the characteristics of correction performed by the reverse gamma correction circuit 30. The reverse gamma correction circuit performs correction with respect to an input signal x by use of a characteristic of $y=x^{2.2}$

to produce an output signal y. This characteristic corresponds to the characteristic of a cathode ray tube. If the image display panel 90 is a cathode ray tube, such correction is not necessary. Since the plasma display panel 90a has a linear output characteristic, correction may be performed according to need by use of the correction circuit as described above.

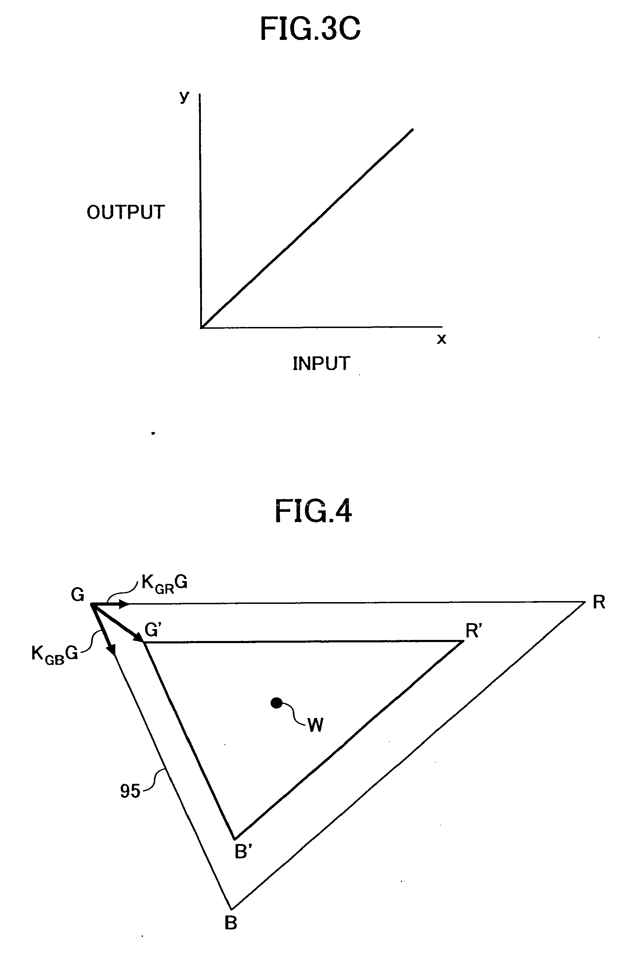

Fig. 3C shows the characteristics of an output video signal of the reverse gamma correction circuit 30. As can be seen in Fig. 3C, the input signal and the output signal are related to each other through a linear characteristic. The video signal corrected by the reverse gamma correction circuit 30 to have a linear characteristic is then supplied to the color matrix circuit 40.

The color matrix circuit 40 serves to convert coordinates for the purpose of color reproduction in the case in which the video signal conversion circuit 20 performs a signal conversion.

Fig. 4 is a drawing for explaining the function of the color matrix circuit 40. By use of Fig. 4, the function of the color matrix circuit 40 will be described with respect to a case in which a range of color reproduction by the plasma display panel 90a is wider than the range of color reproduction according to the standard of the input color video signals.

A green (G) signal shown in Fig. 4 will be used as an example for the purpose of explanation. When a Go signal of the input color video signals conforming to the ITU-R BT.709 standard is supplied to and displayed on the plasma display panel 90a, such signal is reproduced at a corner G situated at the perimeter of a color reproduction range 95 of the plasma display panel 90a. This Go signal, however, should really be reproduced as a signal at a position G' within the color reproduction range 95. In consideration of this, a G' signal is produced by adding a vector corresponding to an input-signal-R component $K_{GR}G$ obtained as $K_{GR}$ (>0) times the input signal G and a vector corresponding to an input-signal-B component $K_{GB}G$ obtained as $K_{GB}$ (>0) times the input signal G, thereby attaining a coincidence with the chromaticity of the Go signal. Such correction is also performed with respect to the blue signal (B) and the red signal (R) to produce a B' signal and an R' signal. With an extended color gamut provided by the xvYCC standard, RGB values can assume negative values, so that correct color reproduction is attainable with respect to the color reproduction range 95 of the plasma display panel 90a extending beyond the color reproduction range represented by R', G', and B'.

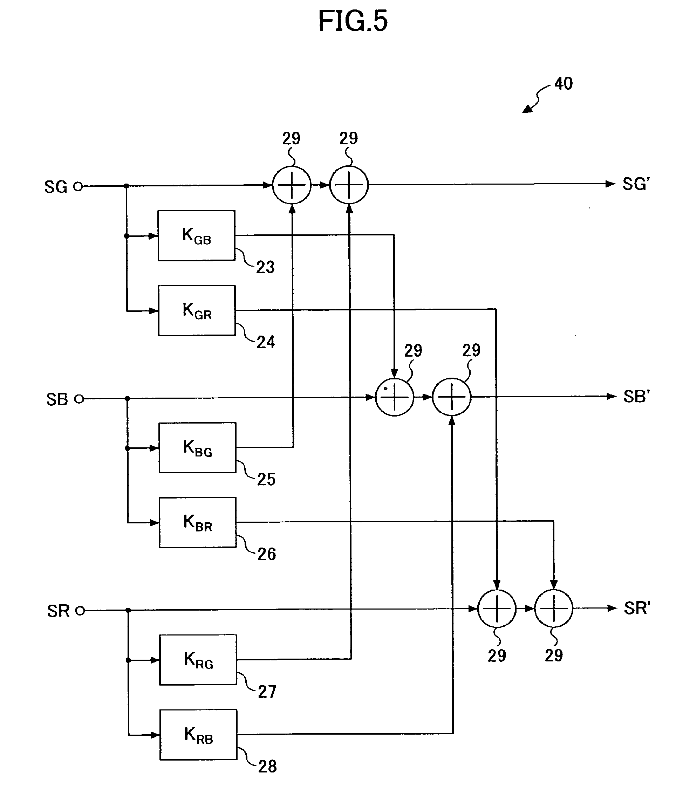

Fig. 5 is a block diagram showing an example of the configuration of the color matrix circuit 40. In Fig. 5, the color matrix circuit 40 receives a green (G) signal SG, a blue (B) signal SB, and a red (R) signal SR as input color video signals. The color matrix circuit 40 then performs color corrections as described in connection with Fig. 4 to produce corrected signals SG', SB', and SR'.

The color matrix circuit 40 shown in Fig. 5 performs correction as represented by formula (3).

$$SG' = SG + K_{BG} \cdot SB + K_{RG} \cdot SR$$
$$SB' = SB + K_{GB} \cdot SG + K_{RB} \cdot SR \quad \cdots\cdots\cdots\cdots (3)$$
$$SR' = SR + K_{GR} \cdot SG + K_{BR} \cdot SB$$

wherein,

$K_{BG}$: Mixing Factor of B Signal for G Signal
$K_{RG}$: Mixing Factor of R Signal for G Signal
$K_{GB}$: Mixing Factor of G Signal for B Signal
$K_{RB}$: Mixing Factor of R Signal for B Signal
$K_{GR}$: Mixing Factor of G Signal for R Signal
$K_{BR}$: Mixing Factor of B Signal for R Signal

The circuit shown in Fig. 5 serves to perform color correction as described with reference to Fig. 4. In Fig. 4, attention was focused only on the G signal, which corresponds to a situation in which SB and SR are both zero. In such a case, the following is obtained based on formula (3).

$$SG' = SG + K_{BG} \cdot 0 + K_{RG} \cdot 0 = SG$$

$$SB' = 0 + K_{GB} \cdot SG + K_{RB} \cdot 0 = K_{GB} \cdot SG$$

$$SR' = 0 + K_{GR} \cdot SG + K_{RG} \cdot 0 = K_{GR} \cdot SG$$

As can be seen, the correction as shown in Fig. 4 is achieved.

The white balance correction circuit 50 will now be described by referring to Fig. 2. The white balance correction circuit 50 serves to change the gain ratio of RGB signals. Namely, the gain ratio of RGB signals is changed and adjusted based on whether the displayed white color is reddish white or bluish write.

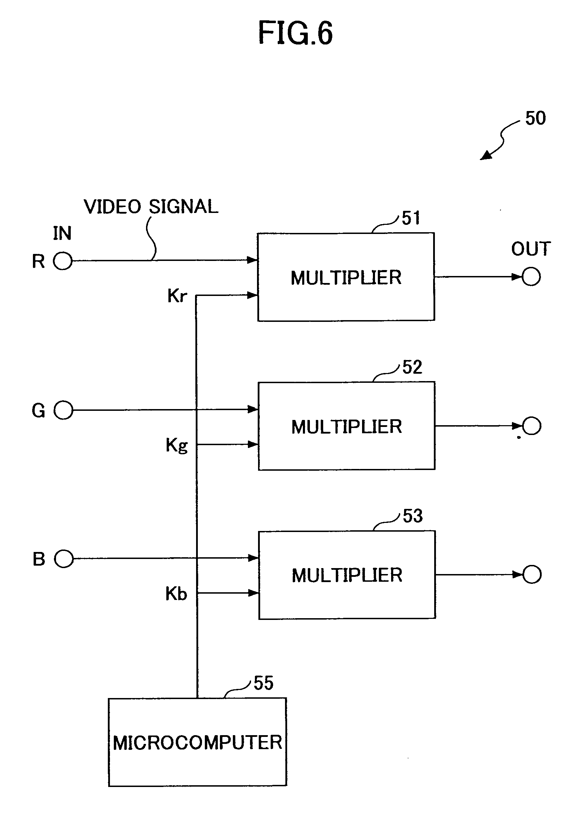

Fig. 6 is a block diagram showing an example of the white balance correction circuit 50. In Fig. 6, the white balance correction circuit 50 includes multipliers 51, 52, and 53 and a microcomputer 55. As shown in Fig. 6, the white balance correction circuit 50 uses the multipliers 51, 52, and 53 to multiply supplied video signals R, G, and B by multiplication factors (amplitude factors) Kr, Kg, and Kb, respectively, supplied from the microcomputer 55. The microcomputer 55 supplies the factors Kr, Kg, and Kb for respective video signals R, G, and B to the multipliers 51, 52, and 53 for the purpose of correcting and/or adjusting a white balance by changing the brightness ratio of red, green, and blue. Here, the factors Kr, Kg, and Kb may be identical or may be different, depending on the respective video signals R, G, and B. In this manner, the white balance correction circuit 50 supplies the factors Kr, Kg, and Kb from the microcomputer 55 to the multipliers 51, 52, and 53 to control the amplitudes of respective video signals R, G, and B. This achieves a white balance correction.

It should be noted that in order for the white balance correction circuit 50 to adjust a white balance, a predetermined adjustment-purpose pattern may be displayed, and the amplitudes of video signals R, G, and B may be adjusted such as to achieve a desired white balance. Prior to shipment from factory, for example, a white balance is adjusted and/or corrected with respect to each plasma display apparatus 150a. In so doing, a predetermined adjustment-purpose pattern may be displayed, and the microcomputer 55 is used to select the factors Kr, Kg, and Kb in response to the state of the displayed pattern, thereby achieving a desired white balance.

Turning back to Fig. 2, a description will now be given of the subfield conversion circuit 60, the plasma display panel drive circuit 80a, and the plasma display panel 90a, which are constituent elements unique to the plasma display apparatus 150a. These three constituent elements have their operations interrelated to each other, so that a description will be given with respect to these elements altogether.

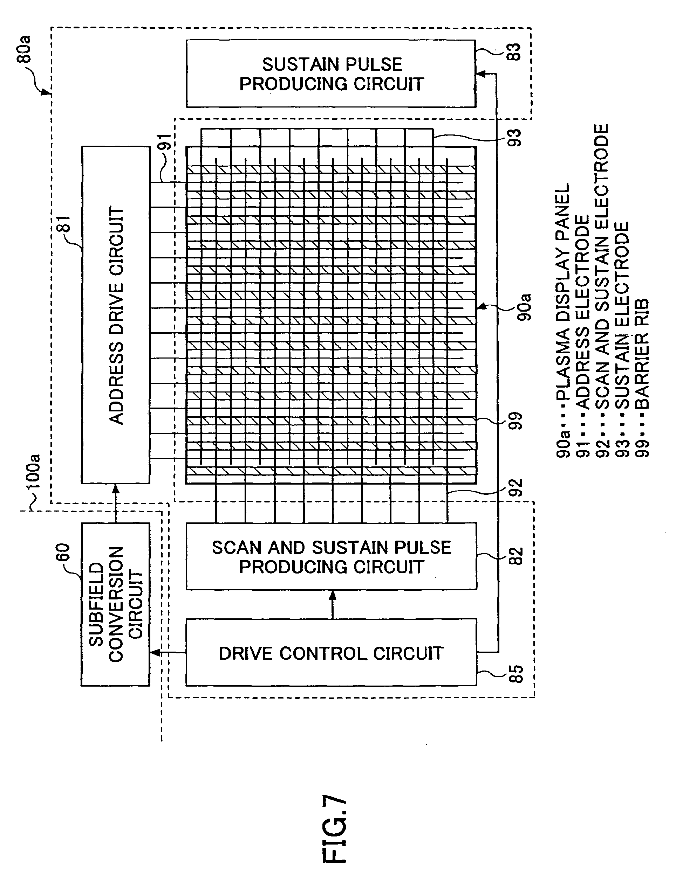

Fig. 7 is a block diagram schematically showing an example of the subfield conversion circuit 60, the plasma display panel drive circuit 80a, and the plasma display panel 90a of the plasma display apparatus 150a. In Fig. 7, the plasma display apparatus 150a includes the plasma display panel 90a, address electrodes 91, scan and sustain electrodes 92, sustain electrodes 93, barrier ribs 99, an address drive circuit 81, a scan and sustain pulse producing circuit 82, a sustain pulse producing circuit 83, a drive control circuit 85, and the subfield conversion circuit 60.

As shown in Fig. 7, main parts of the plasma display apparatus 150a are the plasma display panel 90a, the plasma display panel drive circuit 80a, and the subfield conversion circuit 60. The plasma display panel 90a includes the address electrodes 91, the scan and sustain electrodes 92, the sustain electrodes 93, and the barrier ribs 99. The plasma display panel drive circuit 80a includes the address drive circuit 81 for driving the address electrodes 91, the scan and sustain pulse producing circuit 82 for driving the scan and sustain electrodes 92, the sustain pulse producing circuit 83 for driving the sustain electrodes 93, and the drive control circuit 85 for controlling these pulse producing circuits. The subfield conversion circuit 60 includes a circuit for performing signal processing that converts supplied video signals into subfields. The subfield conversion circuit 60 is implemented as part of the signal processing module 100a.

The plasma display panel 90a has the address electrodes 91 disposed on one of two opposing glass substrates and also has the scan and sustain electrodes 92 disposed on the other. The space between these glass substrates is partitioned by the barrier ribs 99. Each partitioned space constitutes a discharge cell. The discharge cells have a rare gas such as He-Xe or Ne-Xe sealed therein. As a voltage is applied to the scan and sustain electrodes 92 and the sustain electrodes 93, electric discharge occurs to generate ultraviolet light. Each discharge cell has a coating of fluorescent material that emits light in either one of red, green, or blue. The ultraviolet light generated as described above excites the fluorescent material to cause it to emit light having color peculiar to the type of the fluorescent material. Discharge cells having desired colors are selected in response to video signals, thereby achieving color image display based on the above-described light emission mechanism.

The drive control circuit 85 controls the number of light emissions via the scan and sustain pulse producing circuit 82 in accordance with a display rate (or display electric current) of the image responsive to video signals (i.e., RGB signals).

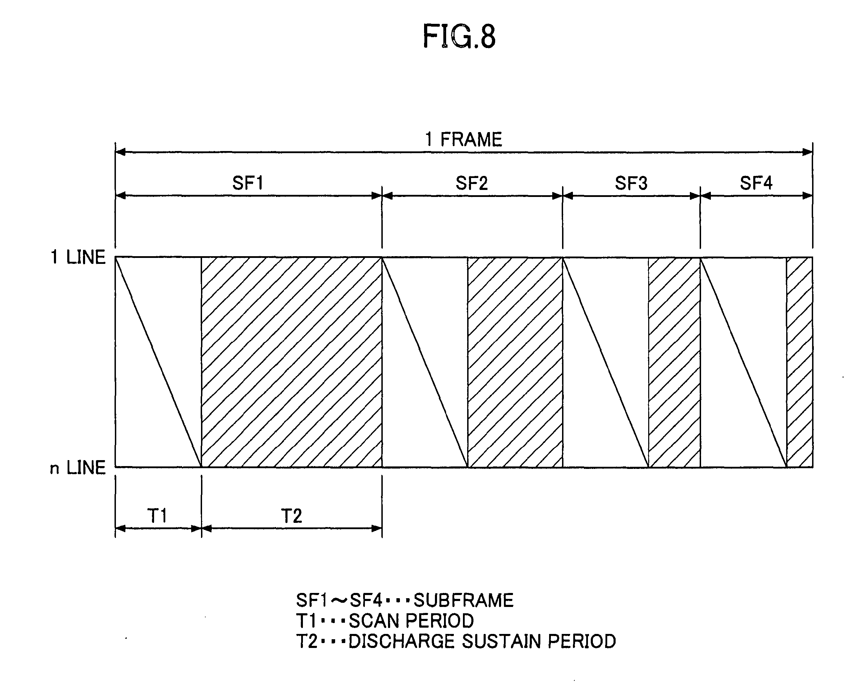

Fig. 8 is a drawing for explaining an example of a drive sequence performed by the plasma display apparatus 150a shown in Fig. 7, and is provided for the purpose of illustrating a subfield method using the light emission mechanism described above.

In the subfield method, one frame is divided into a plurality of subfields (e.g., SF1 through SF4 in the example shown in Fig. 8), which are weighted by different numbers of light emissions. Subfields are selected for each pixel according to the amplitude of the signal at the pixel, thereby representing gray-scale tones. The drive sequence according to the subfield method shown in Fig. 8 is directed to an example in which one frame is divided into four subfields SF1 through SF4 to represent 16 different gray-scale tones. A scan period T1 of each subfield is a period during which discharge cells (hereinafter referred to as light emission cells) are selected for light emission during the subfield. A discharge sustain period T2 is a period during which the selected light emission cells are emitting light.

The discharge sustain periods T2 of the respective subfields SF1 through SF4 each have a length during which the selected cells emit light, and have different numbers of light emissions according to a ratio of 8:4:2:1, respectively. Appropriate ones of the subfields SF1 through SF4 are selected in response to a video signal level, thereby achieving the displaying of 16 ($=2^4$) different gray-scale tones If the number of grayscale tones is desired to be increased, the number of subfields may be increased. With 8 subfields, for example, 256 ($=2^8$) different grayscale tones can be displayed. The luminance level of each subfield is controlled by the number of sustain light emissions.

In order to drive the plasma display panel 90a according to the subfield method as described above, the subfield conversion circuit 60 generates a set of bit signals for each of the plurality of subfields based on the supplied video signals. By doing so, the subfield conversion circuit 60 serves to perform a signal conversion that converts the video signals into subfield data indicative of the presence/absence of light emission with respect to each subfield. Further, the subfield conversion circuit 60 controls the order in which each subfield data is read. Here, the order is such that the subfield data are read separately for each subfield with the passage of time along the time dimension in the following sequence: SF1, SF2, SF3, and so on.

The subfield data read in this manner are supplied as address data to the address drive circuit 81 to perform the drive control of the plasma display panel 90a by use of the plasma display panel drive circuit 80a.

In the example shown in Fig. 8, the subfields SF1 through SF4 are weighted with respect to the numbers of light emissions according to a binary ratio of 8:4:2:1. This is not a limiting example, and the numbers of light emissions may be weighted according to any desired ratio.

Referring to Fig. 2 again, the subfield conversion circuit 60 is specific to the drive sequence performed by the plasma display apparatus 150a, and the signal processing module 100a includes both the video signal conversion circuit 20 and the signal processing circuit 70a containing the subfield conversion circuit 60. With this arrangement, the video signals can be transmitted all the way to the subfield conversion circuit 60 situated at the last stage in the signal processing module without using cables or the like for transmission of the video signals having an increased dynamic range.

The reverse gamma correction circuit 30, the color matrix circuit 40, the white balance correction circuit 50, the subfield conversion circuit 60, the plasma display panel drive circuit 80a, and the plasma display panel 90a, which have been described as constituent elements specific to the plasma display apparatus 150a, may be provided by use of any desired implementations. The implementations described in connection with the present embodiment are only an example, and are not intended to be limiting in any manner.

The reverse gamma correction circuit 30, the color matrix circuit 40, and the white balance correction circuit 50 are not necessarily essential as signal processing for driving the plasma display apparatus 150a. When some or all of these circuits are to be provided according to need, they may be provided integrally in the signal processing circuit 70a of the signal processing module 100a. This achieves signal processing requiring small circuit space. Especially, the reverse gamma correction circuit 30 performs signal processing that causes an increase in the number of bits for its output signals as compared with its input signals. The construction of the plasma display apparatus 150a according to the present embodiment thus has a significant merit. The provision of the video signal conversion circuit 20, the reverse gamma correction circuit 30, the color matrix circuit 40, the white balance correction circuit 50, and the subfield conversion circuit 60 in the single signal processing module 100a achieves cost reduction, conservation of space, and high-speed signal processing.

Further, the present invention is not limited to these embodiments, but various variations and modifications may be made without departing from the scope of the present invention.

## Claims

1. An image display apparatus which converts a video signal in a first video signal format into a video signal in a second video signal format causing an increase in dynamic range, and displays the video signal in the second video format, comprising:

   a video signal conversion circuit configured to receive the video signal in the first video signal format and to produce the video signal in the second video signal format;
   a drive circuit configured to drive an image display panel according to the video signal in the second video signal format; and
   a signal processing module including signal processing circuits configured to perform signal processing necessary to drive the drive circuit,
**characterized in that** the video signal conversion circuit is situated inside the signal processing module.

2. The image display apparatus as claimed in claim 1, wherein the signal processing module is one of a circuit board and an ASIC.

3. The image display apparatus as claimed in claim 1, wherein the video signal in the first video signal format is a YCbCr signal, and the video signal in the second video signal format is an RGB signal.

4. The image display apparatus as claimed in claim 3, wherein the image display panel is a plasma display panel, and the signal processing circuits include a subfield conversion circuit.

5. The image display apparatus as claimed in claim 4, wherein the signal processing circuits include a reverse gamma correction circuit.

6. The image display apparatus as claimed in claim 5, wherein the signal processing circuits include a color matrix circuit.

7. The image display apparatus as claimed in claim 6, wherein the signal processing circuits include a white balance correction circuit.

8. An image display apparatus which performs a video signal conversion converting a video signal in a first video signal format into a video signal in a second video signal format causing an increase in dynamic range for display of the video signal in the second video format, comprising:

    a video signal conversion circuit configured to receive the video signal in the first video signal format and to produce the video signal in the second video signal format;
    a drive circuit configured to drive an image display panel according to the video signal in the second video signal format; and
    a signal processing module including signal processing circuits configured to perform signal processing necessary to drive the drive circuit,
    **characterized in that** the video signal conversion circuit is situated inside the signal processing module, and a video signal input into the signal processing module is in the first video signal format.

# FIG.1

EP 2 009 930 A2

150

100

10

YCbCr 10bit

20

RGB 12bit

70

80

90

| TELEVISION SIGNAL PROCESSING CIRCUIT | VIDEO SIGNAL CONVERSION CIRCUIT | SIGNAL PROCESSING CIRCUIT | IMAGE DISPLAY PANEL DRIVE CIRCUIT | IMAGE DISPLAY PANEL |

# FIG.2

EP 2 009 930 A2

# FIG.3A

# FIG.3B

$y = x^{2.2}$

# FIG.3C

# FIG.4

# FIG.5

# FIG.6

50

VIDEO SIGNAL

IN

R ◯ →

51

MULTIPLIER

OUT
◯

Kr →

52

G ◯ →

MULTIPLIER

◯

Kg →

53

B ◯ →

MULTIPLIER

◯

Kb →

55

MICROCOMPUTER

FIG.7

SUBFIELD CONVERSION CIRCUIT ~60

ADDRESS DRIVE CIRCUIT ~81

~100a

~80a

~91

DRIVE CONTROL CIRCUIT

SCAN AND SUSTAIN PULSE PRODUCING CIRCUIT

SUSTAIN PULSE PRODUCING CIRCUIT

85    82   92   99        90a        93    83

90a・・・PLASMA DISPLAY PANEL
91・・・ADDRESS ELECTRODE
92・・・SCAN AND SUSTAIN ELECTRODE
93・・・SUSTAIN ELECTRODE
99・・・BARRIER RIB

EP 2 009 930 A2

# FIG.8

SF1～SF4・・・SUBFRAME
T1・・・SCAN PERIOD
T2・・・DISCHARGE SUSTAIN PERIOD

EP 2 009 930 A2

# FIG.9

RANGE OF BT.709, BT.601

RANGE OF xvYCC

FIG.10

# FIG.11.

```
                                                            250

                                          210

110                120        RGB 10bit    200          180          190
TELEVISION         YCbCr/               PLASMA        PLASMA       PLASMA
SIGNAL             RGB                   DISPLAY       DISPLAY      DISPLAY
PROCESSING                              SIGNAL        PANEL        PANEL
CIRCUIT                                 PROCESSING    DRIVE
                                        CIRCUIT       CIRCUIT
```

EP 2 009 930 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- New Standard for Extended Gamut Color Space for Video Applications. *The Journal of the Institute of Image Information and Television Engineers,* 2006, vol. 60 (11), 1749-1754